(19) **Europäisches Patentamt**
**European Patent Office**
**Office européen des brevets**

(11) **EP 4 726 653 A1**

(12) # EUROPEAN PATENT APPLICATION

(43) Date of publication:
**15.04.2026  Bulletin 2026/16**

(51) International Patent Classification (IPC):
**G06T 7/207** (2017.01)

(21) Application number: **24383090.8**

(22) Date of filing: **08.10.2024**

(52) Cooperative Patent Classification (CPC):
**G06T 7/207**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Ikerlan, S. Coop.**
**20500 Arrasate-Mondragon (ES)**

(72) Inventors:
• **FERNANDEZ, Ander**
**20500 ARRASATE-MONDRAGÓN (ES)**
• **VALERDI, Juan Luis**
**20500 ARRASATE-MONDRAGÓN (ES)**
• **ITURBE, Xabier**
**20500 ARRASATE-MONDRAGÓN (ES)**
• **DÁVILA, Maria Angélica**
**20500 ARRASATE-MONDRAGÓN (ES)**

(74) Representative: **D Young & Co LLP**
**Briton House**
**Briton Street**
**Southampton SO14 3EB (GB)**

(54) **A MOTION CALCULATOR FOR AN EVENT BASED IMAGE SENSOR, A METHOD OF CALCULATING MOTION AND A COMPUTER PROGRAM**

(57)    A motion calculator for an event based image sensor is provided, the motion calculator comprising: input circuitry configured to receive an indication of a pixel position associated with a current event detected by the event based image sensor; accumulation circuitry configured to update an accumulated value of a current set of events based on the pixel position associated with the current event; determination circuitry configured to determine whether the current event is a final event of the current set of events; and calculation circuitry configured, when it is determined that the current event is the final event of the current set of events, to: calculate a representative value of the pixel position for events in the current set of events based on the accumulated value; and calculate motion based on a difference between the representative value of the pixel position for events in the current set of events and a representative value of the pixel position for a preceding set of events, and a difference between a representative time of detection assigned to the current set of events and a representative time of detection of the preceding set of events.

Figure 4

**Description**

**BACKGROUND**

**Field of the Disclosure**

The present disclosure relates to a motion calculator for an event based image sensor, a method of calculating motion and a computer program.

**Description of the Related Art**

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present invention.

An event-based sensor, such as a Dynamic Vision Sensor (DVS), is a type of imaging sensor that responds to changes in brightness. A pixel of an event-based sensor operates independently and asynchronously and reports changes in brightness as they occur. As an example, each pixel of an event-based imaging sensor may compare a current brightness level to a stored reference value. Then, if the change in brightness between the current brightness level and the stored reference value exceeds a given threshold, the pixel will report an event. When the event is reported, the pixel may reset its reference value to the new brightness.

Therefore, an event-based sensor, such as the DVS, is an asynchronous sensor with high temporal resolution and a streaming nature.

Events generated by event-based sensors introduce a novel representation of visual data and change the way traditional vision processing is done through frames. The highly sparse data, asynchronous generation, and stream nature of the data from event-based sensors require the development of new algorithms, methods, and hardware to process this data and extract information.

Within the context of cameras and visual data processing, optical flow can be defined as the distribution of apparent velocities of movement of the brightness pattern in an image. Optical flow is one measure of motion which can be determined. In examples, scene flow can be determined based on the apparent velocities of movement of the brightness pattern in an image. This can be determined when three dimensional positional information of an event is acquired.

A common assumption made when implementing motion calculation (such as optical flow algorithms) is that for a given time interval and a delimited area, the movement of the edges or features within it can be considered as one single linear motion. For frame-based visual recordings, these features have to initially be identified and extracted as representatives of the motion.

However, for event-based visual data (such as that received from an event based imaging sensor) the data itself already represents changes in the scene, which may be produced by a relative movement between the camera and the subject. Therefore, all events received are considered to contribute to the calculation of the motion vector.

This can make it very challenging to calculate movement vectors (such as optical flow) of events from an event based imaging camera.

Indeed, mismatches in contrast detection circuits, variable time delays introduced by the read-out data queues and varying illumination conditions may introduce event latencies ranging from a few μS to a few mS for an event based imaging sensor. These event latencies may negatively impact the calculation of optical flow (or other movement vector) for an event based imaging sensor. For example, events occurring at slightly different times may be erroneously interpreted as movement, since time differences between consecutive events may not exactly represent time differences of the visual stimuli generated in the real scene captured by the event based imaging sensor.

Accordingly, it is an aim of the present disclosure to address these issues.

**SUMMARY**

A brief summary about the present disclosure is provided hereinafter to provide a basic understanding related to certain aspects of the present disclosure.

According to a first aspect of the disclosure, there is a motion calculator for an event based image sensor, comprising: input circuitry configured to receive an indication of a pixel position associated with a current event detected by the event based image sensor; accumulation circuitry configured to update an accumulated value of a current set of events based on the pixel position associated with the current event; determination circuitry configured to determine whether the current event is a final event of the current set of events; and calculation circuitry configured, when it is determined that the current event is the final event of the current set of events, to: calculate a representative value of the pixel position for events in the current set of events based on the accumulated value; and calculate motion based on a difference between the representative value of the pixel position for events in the current set of events and a representative value of the pixel position for a preceding set of events, and a difference between a representative time of detection assigned to the current set of events and a representative time of detection of the preceding set of events.

According to a second aspect of the disclosure, there is a method of calculating motion, comprising: receiving an indication of a pixel position associated with a current event detected by the event based image sensor; updating an accumulated value of a current set of events based on the pixel position associated with the current event; determining whether the current event is a final event of the current set of events; and, when it is determined that the current event is the final event of the current set of events: calculating a representative value of the pixel position for events in the current set of events based on the accumulated value; and calculating motion based on a difference between the representative value of the pixel position for events in the current set of events and a representative value of the pixel position for a preceding set of events, and a difference between a representative time of detection assigned to the current set of events and a representative time of detection of the preceding set of events.

According to a third aspect of the disclosure, there is a computer program comprising instructions which, when implemented by a computer, cause the computer to perform a method according to the second aspect of the disclosure.

Further aspects of the disclosure are defined by the dependent claims.

In accordance with embodiments of the disclosure, a calculation of motion (such as optical flow) for events from an event based imaging sensor can be more efficiently and reliably determined.

The present disclosure is not particularly limited to these advantageous technical effects. Other technical effects will become apparent for the skilled person when reading the disclosure.

## BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:

Figure 1 illustrates a functional diagram of a Dynamic Vision Sensor pixel;

Figure 2 illustrates an example motion vector in accordance with embodiments of the disclosure;

Figure 3 illustrates an example motion vector in accordance with embodiments of the disclosure;

Figure 4 illustrates an example motion calculator in accordance with embodiments of the disclosure;

Figure 5 illustrates an example implementation of an optical flow calculation in accordance with embodiments of the disclosure;

Figure 6 illustrates an example motion vector for a set of events in accordance with embodiments of the disclosure;

Figure 7A illustrates an example of event address segmentation in accordance with embodiments of the disclosure;

Figure 7B illustrates an example of overlapping voxels in accordance with embodiments of the disclosure;

Figure 7C illustrates an example of features crossing a voxel boundary in accordance with embodiments of the disclosure;

Figure 7D illustrates an example of a discontinuity detector in accordance with embodiments of the disclosure;

Figure 7E illustrates an example implementation of an optical flow calculation in accordance with embodiments of the disclosure;

Figure 7F illustrates an example of combining overlapping voxels and discontinuity detection in accordance with embodiments of the disclosure;

Figure 8 illustrates an example method of motion calculation in accordance with embodiments of the disclosure;

Figure 9 illustrates an example imaging system comprising the motion calculator in accordance with embodiments of the disclosure.

## DESCRIPTION OF THE EMBODIMENTS:

Referring now to the drawings, wherein like reference numerals designate identical or corresponding parts throughout the several views.

As explained in the Background, events generated by event-based sensors introduce a novel representation of visual data and change the way traditional vision processing is done through frames.

That is, an event-based sensor, such as a Dynamic Vision Sensor (DVS), is an imaging sensor that responds to changes in brightness. A pixel of the event-based sensor operates independently and asynchronously and reports changes in brightness as they occur. As an example, each pixel of the event-based imaging sensor may compare a current brightness level to a stored reference value. Then, if the change in brightness between the current brightness level and the stored reference value exceeds a given threshold, the pixel will report an event. When the event is reported, the pixel will reset its reference value to the new brightness.

Therefore, in some examples of the present disclosure, an event is a change of brightness with an absolute magnitude of the change greater than a threshold value. In some examples, the change of brightness can be caused by an increase in brightness (an event of positive polarity). In other examples, the change of brightness can be caused by a decrease in brightness (an event of negative polarity). Therefore, in some examples, the polarity of the event can be recorded in addition to the magnitude of the event.

The output stream data from an event-based sensor, such as a DVS sensor, includes not only signal events but also a combination of noise events, referred to as background activity (BA). That is, event data from a DVS sensor, combined with noise triggered from various sources within the pixel circuit, produces useful information. Therefore, filtering can be applied in order to reduce the noise from the output stream of the event-based sensor.

New generations of event-based sensors have higher resolutions (ranging from 240 x 240 to 1280 x 720 or even higher) leading to a higher event rate.

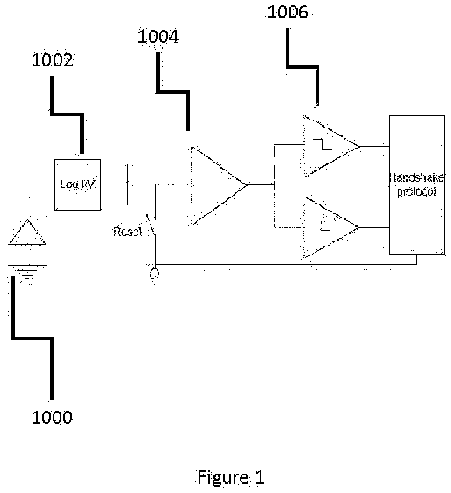

Consider, now, Figure 1 of the present disclosure. Figure 1 of the present disclosure illustrates a functional diagram of a DVS pixel.

The DVS pixel shown in this example comprises a photodiode 1000. As light falls on the photodiode 1000, a current is generated at its output. The logarithmic I/V 1002 is provided such that as the photodiode 1000 receives more light, the voltage output increases logarithmically.

The self-timed switched capacitor differentiator 1004 then amplifies any change in the output voltage which is then compared using the comparators 1006.

Accordingly, the DVS pixel will generate an event (output) when a change in brightness is detected that exceeds a reference value (whether this is a positive or negative change in brightness compared to the reference value).

As explained in the Background, a common assumption made when implementing motion calculation (such as optical flow algorithms) is that for a given time interval and a delimited area, the movement of the edges or features within it can be considered as one single linear motion. For frame-based visual recordings, these features have to initially be identified and extracted as representatives of the motion.

However, for event-based visual data (such as that received from an event based imaging sensor) the data itself already represents changes in the scene, which may be produced by a relative movement between the camera and the subject. Therefore, all events received are considered to contribute to the calculation of the motion vector.

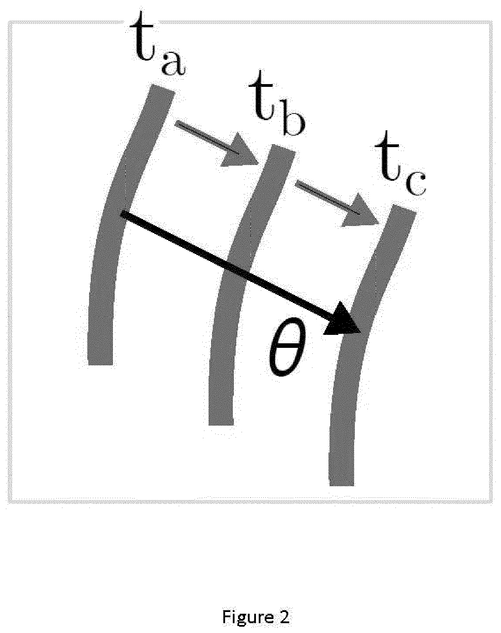

Consider, now, Figure 2 of the present disclosure. Figure 2 of the present disclosure illustrates an example motion vector in accordance with embodiments of the disclosure.

The example of Figure 2 of the present disclosure illustrates an example of calculation of a motion vector (such as optical flow) for a frame-based visual recording. Here, the movement of the edge can be considered as one single linear motion.

More specifically, Figure 2 shows an example of a curve that moves between times $t_a$ and $t_c$ (which could be considered as snapshots or frames captured periodically every $t_c - t_a$). In this example, $\theta$ represents the real optical flow vector, i.e. the direction and magnitude of the curve expressed as distance over time (typically in units of px/ms). If the rate at which the motion of the curve was captured was doubled, the optical flow vector could be estimated more precisely from the positions at $t_a$ and $t_b$, and then from $t_b$ to $t_c$.

While the calculation of the motion vector (including optical flow) can be made in this way for a frame-based visual recording, it becomes difficult to calculate optical flow for events from an event based imaging sensor.

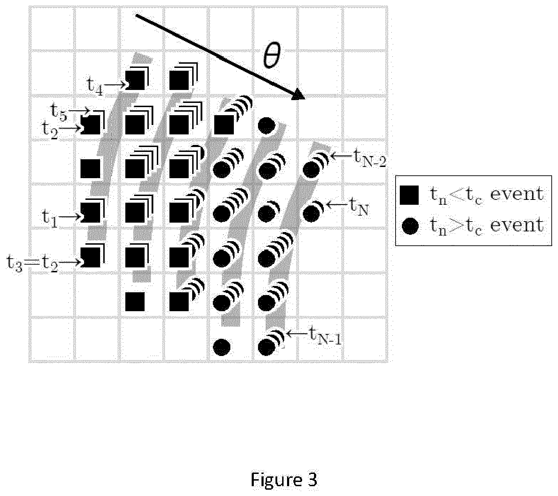

Consider, now, Figure 3 of the present disclosure. Figure 3 of the present disclosure illustrates an example motion vector in accordance with embodiments of the disclosure.

In this example, the calculation of the motion vector $\theta$ is made for a stream of events from an event based imaging sensor (using a prior art technique).

In particular, Figure 3 represents a set of N events generated from the movement of the curve for an example image of 8x8 pixels. The timestamp of a given event $e_n$ is represented by $t_n$, and the time interval is determined by the timestamps of the first and last events in the set: $[t_1, t_N]$. The length of this time interval is chosen so that it allows the curve in the scene to travel at least some pixels.

Time differences between consecutive events do not exactly represent the time differences of the visual stimuli generated in the real scene captured by the event based imaging sensor. This may be due to mismatches in the contrast detection circuits, variable time delays introduced by read-out data queues and varying illumination conditions, which introduce variable event latencies.

Events occurring at slightly different times (e.g. $t_1$ and $t_2$) may be interpreted as a quick upward movement, even though in practice, they arise from the speed at which the curve itself is being 'drawn' - and thus may not exactly represent time differences of visual stimuli generated by movement in the real scene captured by the event based imaging sensor. These events may negatively impact the accuracy with which the optical flow (or other motion vector) can be determined.

This can make it very challenging to calculate movement vectors (such as optical flow) of events from an event based imaging camera.

For at least these reasons, a motion calculator, a method of motion calculation and a computer program are provided in accordance with embodiments of the disclosure.

<Motion Calculator>

As noted, a motion calculator for an event based imaging sensor is provided in accordance with embodiments of the disclosure.

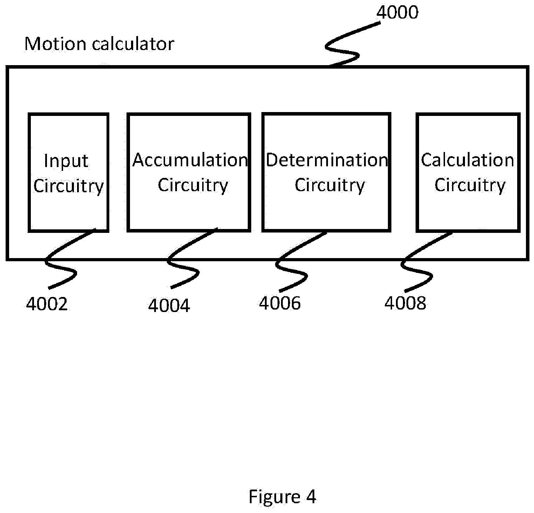

Consider, now, Figure 4 of the present disclosure. Figure 4 illustrates a motion calculator for an event based imaging sensor in accordance with embodiments of the disclosure.

The motion calculator 4000 comprises input circuitry 4002, accumulation circuitry 4004, determination circuitry 4006 and calculation circuitry 4008.

The input circuitry 4002 of the motion calculator 4000 is configured to receive an indication of a pixel position associated with a current event detected by the event based image sensor.

The accumulation circuitry 4004 of the motion calculator 4000 is configured to update an accumulated value of a current set of events based on the pixel position associated with the current event.

The determination circuitry 4006 of the motion calculator 4000 is configured to determine whether the current event is a final event of the current set of events.

The calculation circuitry 4008 of the motion calculator 4000 is configured, when it is determined that the current event is the final event of the current set of events, to: calculate a representative value of the pixel position for events in the current set of events based on the accumulated value; and calculate motion based on a difference between the representative value of the pixel position for events in the current set of events and a representative value of the pixel position for a preceding set of events, and a difference between a representative time of detection assigned to the current set of events and a representative time of detection of the preceding set of events.

In this way, the motion calculator 4000 efficiently and reliably calculates motion based on the events detected by the event based imaging sensor.

That is, since the incoming events are separated into different sets of events by the motion calculator, the motion can thus be calculated as motion between the different sets of events (based upon a comparison of the representative values which are assigned to the respective sets of events. In other words, the motion is calculated based on motion between representative values between two different 'clouds' of events. Accordingly, the impact of small scale fluctuations (such as those caused by latencies introduced by the contrast detection circuits of the event based imaging sensor, for example) can be mitigated, thus providing an improved and more reliable calculation of the motion (such as optical flow) for events from an event based imaging sensor.

Furthermore and in addition, the manner of calculation of the motion by the motion calculator is particularly efficient, rendering it inherently compatible with low-level digital hardware architecture (which can be implemented as an Field Programmable Gate Array, for example). In particular, this is achieved through the simple accumulation of an accumulated value of the current set of events as the events are received from the event based imaging sensor, with calculations to calculate the motion being performed only once the event has been determined as the final event of that set of events. Indeed, this ensures that the calculation made by the motion calculator can be performed with minimal latency (i.e. in substantially real time) as events are received from the event based imaging sensor. Furthermore, it minimizes the digital logic resources which are required for calculation of the motion.

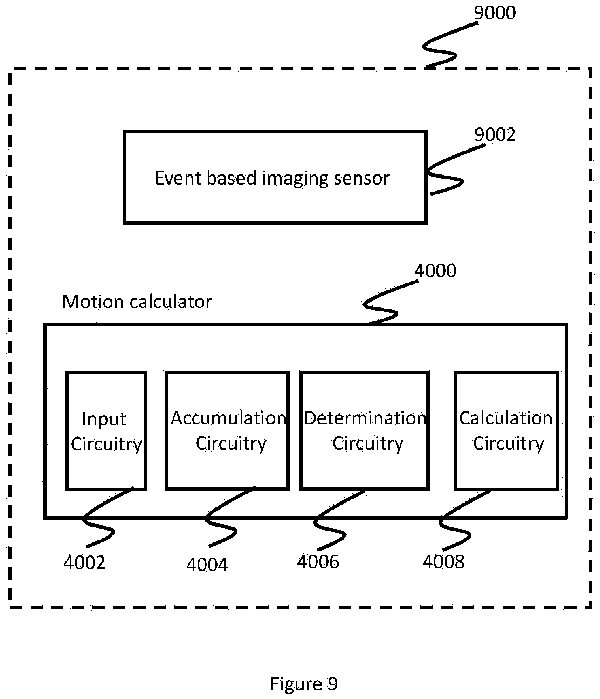

It will be appreciated that the present disclosure is not particularly limited to the specific configuration of the motion calculator as described with reference to Figure 4 of the present disclosure. In examples, the motion calculator 4000 may be provided as part of a system (described in more detail later, with reference to Figure 9 of the present disclosure). In examples, the functionality of the motion calculator 4000 may be performed in a distributed manner using a number of different processing devices.

While the motion calculator 4000 is described as comprising four different circuits (the input circuitry 4002, the accumulation circuitry 4004, the determination circuitry 4006 and the calculation circuitry 4008) it will be appreciated that the present disclosure is not particularly limited in this respect. In examples, the different circuits described with reference to Figure 4 may be combined in a single circuitry. Alternatively, one or more additional circuits may also be provided.

In examples, the circuitry 4002, 4004, 4006 and 4008 may be a microprocessor carrying out computer instructions. In examples, the circuitry 4002, 4004, 4006 and 4008 may be an Application Specific Integrated Circuit. The computer instructions may be stored on a storage medium which maybe a magnetically readable medium, optically readable medium or solid state type circuitry. The storage medium may be integrated into the motion calculator or may be separate to the motion calculator 4000 and connected thereto using either a wired or wireless connection. The computer instructions may be embodied as computer software that contains computer readable code which, when loaded onto the processor circuitry, configures the processor circuitry to perform a method according to embodiments of the disclosure. This will be described in more detail later.

In examples, the input circuitry 4002 may be configured to receive the indication of pixel position associated with the event based imaging sensor using any suitable wired or wireless connection. The type of connection formed between the event-based imaging sensor and the motion calculator 4000 may vary depending on the specific situation to which the embodiments of the disclosure are applied.

In examples, the motion calculator 4000 may receive events from the event-based image sensor in a real time environment (i.e. as those events are generated by the event-based image sensor). In examples, the motion calculator may receive a stream of events from the event-based image sensor. However, in examples, the motion calculator 4000 may be configured to calculate motion based on events which have previously been generated by an event-based image sensor (e.g. after those events have been stored in a storage unit (such as a buffer)).

Further details of the motion calculator according to embodiments of the disclosure will now be described with reference to an example implementation of the motion calculator. It will be appreciated that while certain features of the disclosure are described with reference to this example implementation, the present disclosure is not particularly limited in this regard and these features may be applied, more generally, to motion calculator such as that described with reference to Figure 4 of the present disclosure.

<Example Implementation>

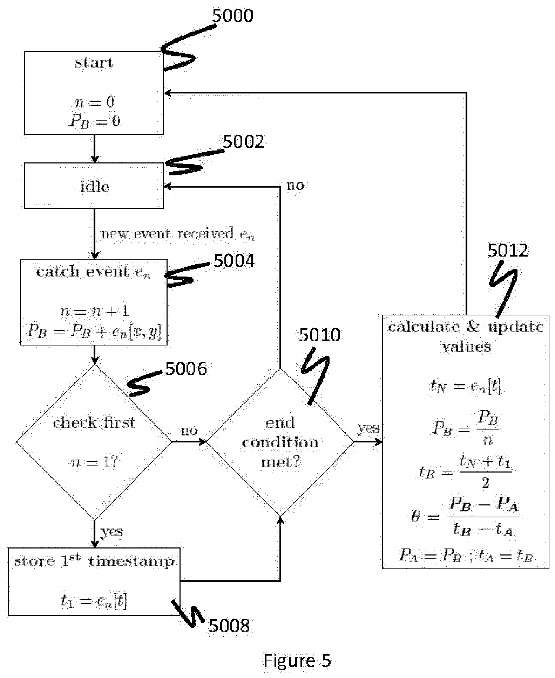

Consider, now, Figure 5 of the present disclosure. Figure 5 of the present disclosure illustrates an example implementation of an optical flow calculation in accordance with embodiments of the disclosure.

In examples, the optical flow calculation illustrated with reference to Figure 5 of the present disclosure may be performed with an apparatus such as that described with reference to Figure 4 of the present disclosure.

In this example implementation, the event based imaging sensor detects events where each event contains information about the pixel position in two dimensions (e.g. an x direction and a y direction). Therefore, the motion calculated is optical flow, which thus describes the distribution of apparent velocities in the two dimensional events from the event based imaging sensor. However, as previously noted, the present disclosure is not particularly limited in this respect. That is, embodiments of the disclosure can be applied to an event based imaging sensor where each event (or pixel position) is defined in three dimensions (e.g. an x direction, a y direction and a z direction). Indeed, in some examples, the z value of the event (i.e. the depth) may be provided directly by a three dimensional event based imaging sensor. Alternatively, the z value of the event may be provided by an intermediate processing device which estimates and incorporates the value of z into each event. Accordingly, in some examples, the motion calculated is a scene flow, which thus describes the distribution of apparent velocities in the three dimensional events from the event based imaging sensor. More generally, the present disclosure can be used in order to calculate the motion for events from an event based imaging sensor where each event is defined by values in N dimensions, where N is any real number.

Nevertheless, the example implementation of Figure 5 is described with reference to a situation where each event contains information about the pixel position in two dimensions, and thus is an example implementation concerning the calculation of optical flow.

In this example, the method comprises estimating the average position P and time t of a set of events corresponding to a certain time interval, and then computing the optical flow by comparing the average position P and time t of a set of events to those of the preceding interval.

Therefore, optical flow, $\theta$, can be defined as:

$$\theta = \frac{\Delta P}{\Delta t}$$

A number of definitions can therefore be made:

1. "*A*" is the set of all the events in a time interval, and "*B*" is the set of all the events in a time interval posterior and non-overlapping to that of *A*.

2. The set A contains $N_A$ events, labeled $e_n$, from $e_1$ to $e_{NA}$. The set B contains $N_B$ events, labeled $e'_m$, from $e'_1$ to $e'_{NB}$.

3. $t_n$ is the timestamp of each event $e_n$ in *A*. Those events are ordered by increasing timestamp so that $t_{n-1} \leq t_n$. Likewise, $t'_m$ is the timestamp of each event $e'_m$ in *B*. Those events are ordered by increasing timestamp so that $t'_{m-1} \leq t'_m$. And because of definition 1, $t_n < t'_m$ for any $n \in [1, N_A]$ and $m \in [1, N_B]$.

4. The time interval of *A* is determined by the timestamps of the first and last events $e_1$ and $e_{NA}$ : $[t_1, t_{NA}]$. The time interval of B is determined by the timestamps of the first and last events $e'_1$ and $e'_{NB}$: $[t'_1, t'_{NB}]$.

5. $P_A$ and $P_B$ are the average points of the positions of all the events in *A* and *B* respectively:

$$P_A = \frac{1}{N_A} \sum_{n=1}^{N_A} e_n(x, y), \qquad P_B = \frac{1}{N_B} \sum_{n=1}^{N_B} e'_m(x, y)$$

6. $t_A$ and $t_B$ represent the central value of the time intervals corresponding to A and B respectively:

$$t_A = \frac{t_{NA} + t_1}{2} \qquad\qquad t_B = \frac{t'_{NA} + t'_1}{2}$$

Based on these definitions, the optical flow can be calculated after the last event in *B* has been processed, as:

$$\theta = \frac{\Delta P}{\Delta t} = \frac{P_B - P_A}{t_B - t_A}$$

These calculations can be applied as illustrated in Figure 5 of the present disclosure.

At step 5000, a calculation for a new set of events *B* is started. Accordingly, *n* is initialized to zero (as there are no events currently in this new set of events *B*) and the average position $P_B$ is also initialized to zero (as there is no average position for this set of events *B* at this stage).

In step 5002, the circuitry remains idle while it awaits a new event from the event based imaging sensor.

Then, upon receiving a new event $e_n$ (which is indicated by a pixel positon associated with the event detected by the event based imaging sensor) the circuitry is configured in step 5004 to update the value of *n* (the number of events) and $P_B$ (the current value of the average position of the events in *B*).

As such, when a new event is received, only two sums are performed to update *n* and $P_B$. Further additional arithmetic operations are required at the end of every calculation cycle (i.e. when an end condition - described in more detail later - has been detected).

A check is then made, in step 5006, as to whether the value of *n* is equal to 1 (i.e. whether the current event is the first event in the set of events *B*). If the event is the first event in the set of events *B*, then the flow proceeds to step 5008. Otherwise, the flow proceeds directly to 5010.

In step 5008 - i.e. when it has been determined that the current event received from the event based imaging sensor is the first event of the set of events B - the circuitry is configured to store the first timestamp (i.e. the time at which the first event in the set of events was received). Therefore, the circuitry is configured to set $t_1 = e_n[t]$. In examples, the timestamp *t* for an event may be received from the event based imaging sensor.

However, in other examples, the timestamp t of an event may be received from an external device (e.g. a system clock) and/or may be determined by the motion calculator 4000 (e.g. based on the time that said event was received from the event based image sensor).

Once stored (or, alternatively, if the current event is not the first event of the set of events) the process flow proceeds to step 5010.

In step 5010, it is determined whether or not an end condition is met. The end condition (described in more detail below) is a condition to identify whether or not the current event is the final event in the set of events *B*. There are numerous different ways in which this can be determined in accordance with embodiments of the disclosure (and thus numerous different end conditions which can be applied). Accordingly, the present disclosure is not particularly limited to any specific end condition, since the end condition may vary depending on the specific situation to which embodiments of the present disclosure are applied.

Nevertheless, it will be appreciated that when the end condition is not satisfied, the process flow returns to step 5002. Here, the circuitry awaits further events from the event based imaging sensor which are to be accumulated in the current set of events B.

On the other hand, when it is determined, in step 5010 that the end condition is met, the process flow proceeds to step 5012.

In step 5012, a number of arithmetic operations are performed based on the values which have been accumulated during the preceding steps.

In particular, the timestamp of the current event (which has been determined in step 5010 as the final event of that set of events) is recorded as $t_N$. In other words, $t_N$ is set equal to $e_n[t]$.

Furthermore, the average position of the events in $B$ is then determined based on the value of $P_B$ which has thus been computed and the value of $n$ (which is the total number of events in the set of events $B$). In other words, the average position of the events in 8 is determined as $P_B = \frac{P_B}{n}$.

The representative time for the set of events B is further determined as $t_B = \frac{t_N + t_1}{2}$ (that is, as the average of the time of the first event of the set of events and the last event of the set of events).

Thus, the optical flow can be calculated after the last event in $B$ has been processed, as:

$$\theta = \frac{\Delta P}{\Delta t} = \frac{P_B - P_A}{t_B - t_A}$$

where the values of $P_A$ and $t_A$ are values which have been computed for the preceding set of events following the process described with reference to Figure 5 of the present disclosure.

Thus, as has been explained, for every new event which is received, only two sums are performed to update $n$ and $P_B$ (see step 5004) and only a few more basic arithmetic operations at the end of every calculation cycle must be performed in order to compute the value of optical flow (see step 5012, once the end condition of step 5010 has been satisfied). It will be appreciated that the logic resources and latencies involved in performing such operations are minimal and thus allow the optical flow (or other indicator of motion) to be estimated nearly immediately (i.e. in real time) as the events are received from the event- based imaging sensor.

In addition, only the value of $P_B$ and $t_A$ have to be stored, as they hold the accumulated value of all the preceding previous events, minimizing memory requirements compared to having to save all the events in a given time interval. Thus, in step 5010, once the optical flow has been determined, the value of $P_A$ is set as $P_B$ and the value of $t_A$ is set as $t_B$. The process flow then returns to step 5000, where the values of n and $P_B$ are again initialised in order to calculate the optical flow based on the subsequent set of events which are received.

The value of the optical flow $\theta$ which has been calculated does not, itself, need to be stored by the motion calculator. That is, the value of the optical flow $\theta$ which has been calculated between a set of events A and a set of events 6 does not necessarily impact the calculation of the optical flow which is made between subsequent sets of events (this is discussed in more detail later). Accordingly, once calculated, the optical flow $\theta$ does not need to be retained by the motion calculator in accordance with embodiments of the disclosure. However, it will be appreciated that even though the value of the optical flow which has been calculated is not retained by the motion calculator, it may nevertheless be output from the event based imaging sensor and/or otherwise provided to a downstream component of an event based imaging system. As an example, the value of the optical flow which has been calculated may be used in a component such as a filter of events from the event based imaging sensor and/or may otherwise be used in order to adapt the imaging performed by the event based imaging sensor. The use of the optical flow $\theta$ once calculated is not particularly limited in accordance with embodiments of the disclosure.

Thus, it will be appreciated that the example of Figure 5 of the present disclosure is an example implementation of a motion calculator such as that described with reference to Figure 4 of the present disclosure. That is, the example implementation of Figure 5 provides an example implementation of input circuitry configured to receive an indication of a pixel position associated with a current event detected by the event based image sensor (step 5002) accumulation circuitry configured to update an accumulated value of a current set of events based on the pixel position associated with the current event (step 5004); determination circuitry configured to determine whether the current event is a final event of the current set of events (step 5010); and calculation circuitry configured, when it is determined that the current event is the final event of the current set of events, to (step 5012): calculate a representative value of the pixel position for events in the current set of events based on the accumulated value; and calculate motion based on a difference between the representative value of the pixel position for events in the current set of events and a representative value of the pixel position for a preceding set of events, and a difference between a representative time of detection assigned to the current set of events and a representative time of detection of the preceding set of events.

In the example of Figure 5 of the present disclosure, the representative value is an average value determined based on the accumulated value and a number of events forming part of the current set of events. However, it will be appreciated that the present disclosure is not particularly limited in this regard. Any value can be computed from the respective positions of the events of the set of events as a representative value for those events. For example, the median may be used as a representative value, instead of the average described with reference to Figure 5. Alternatively, a weighted average may be used as the representative value, instead of the average described with reference to Figure 5 of the present disclosure. Indeed, any statistically value which can be computed for the set of events can be used in order to provide the representative value for that set of events as required depending on the situation to which the embodiments of the disclosure are applied.

Furthermore, in the example of Figure 5, the representative time for the set of events is a central time for that event cloud. That is, the representative time of detection assigned to the current set of events is an average time of detection of the events of the current set of events (determined as an average calculated based on the first and last event in that set of events). However, the present disclosure is not particularly limited in this regard. Indeed, any representative time can be computed for the set of events as required depending on the situation to which the embodiments of the disclosure are applied. For example, the representative time can be an average value which is computed based on all events in that set of events (and not merely the first and last event as has been described). Alternatively, the representative time may be assigned to the central event in that set of events (e.g. the time of the median event in the set of events). Alternatively, a weighted average of the time may be computer, with events of a stronger magnitude being assigned a higher weighting factor in the calculation of the representative time. Accordingly, the present disclosure is not particularly limited to the specific calculation of the representative time which has been described with reference to Figure 5 of the present disclosure.

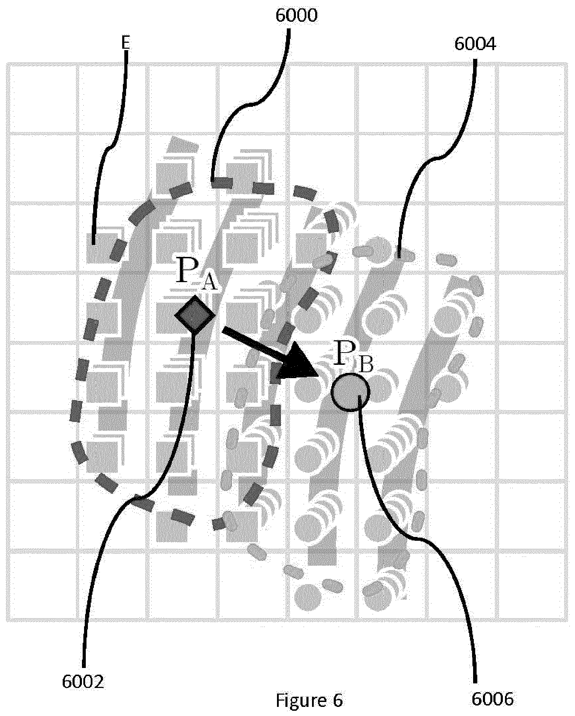

Consider, now, Figure 6 of the present disclosure. Figure 6 of the present disclosure illustrates an example motion vector for a set of events in accordance with embodiments of the disclosure. More specifically, the example of Figure 6 illustrates an example value of an optical flow (as an example of a set of events) which can be calculated based on an example implementation such as that described with reference to Figure 5 of the present disclosure.

In this example, a number of events are received as a stream of events from an event based imaging sensor. These events include events such as E. The set of events 6000 represent a first set of events, *A*. The set of events 6004 represent a second set of events, *B*.

The events of the stream of events which form part of the first set of events *A* and the second set of events *B* have been determined by the motion calculator (e.g. based on whether or not a given end condition is satisfied for a given event which is received from the event based imaging sensor). That is, when the end condition is satisfied with respect to the set of events *A*, any subsequent event received from the event based imaging sensor forms a part of the set of events *B*. On the other hand, when the end condition is satisfied with respect to the event *B*, any subsequent event which is received from the event based imaging sensor forms a part of the next set of events (not shown in Figure 6).

The representative value 6002 for the first set of events *A* is shown in Figure 6. This representative value 6002 corresponds to the value $P_A$ which has been described with reference to Figure 5 of the present disclosure. Likewise, the representative value 6006 for the second set of events *B* is shown in Figure 6. This representative value 6006 corresponds to the value $P_B$ which has been described with reference to Figure 5 of the present disclosure.

The difference between the representative value 6006 and the representative value 6002 can be used in order to determine the optical flow (or other motion vector) for the events which have been received.

As has been explained, when the input visual information consists of asynchronous events, the points that form the curve are received continuously during any time interval used to estimate the optical flow (assuming that the interval is much larger than the temporal resolution of the visual events). Furthermore, the amount, order and position of those events does not necessarily follow a predictable pattern; even if they can be statistically modelled (to a certain extent) based on the characteristics of the imaging sensor, they are (or can be considered) random at very small timescales.

Thus, embodiments of the present disclosure exploit or discard "excessive" time information of the events received and processed. When the time differences between consecutive events is in the order of a few microseconds, these events are, in practice, representing the same curve or feature at a given time. In other words, time differences between consecutive events do not exactly represent time differences of the visual stimuli generated in the real scene captured by the event based imaging sensor. This is due to mismatches in contrast detection circuits (inherent to the fabrication of the die) and variable time delays introduced by the readout data queues while different illumination conditions can also introduce variable event latencies ranging from a few $\mu$S to a few mS.

Disregarding the individual time stamps and taking a representative value (such as an average value) for the position of all events within a set of events gives a reference value for a cloud of events (such as the representative value 6002 for the set of events 6000 illustrated in Figure 6 of the present disclosure, or the representative value 6006 for the set of events 6004 illustrated in Figure 6 of the present disclosure). Then, optical flow can be estimated as the relative position change between the centres of both clouds (representative values 6002 and 6006) as a time $\Delta t$ considered as the time between the representative values of each set of events.

In this way, an estimate of optical flow can be more efficiently and reliably determined for a set of events from an event based imaging sensor, in a way which minimizes computation demand and mitigates the effect of small scale fluctuations between the timing of events.

Returning to Figure 5, further details of the end condition of step 5010 will now be provided.

The end condition of step 5010 of the example implementation of Figure 5 is a condition which can be used in order to determine when the event which has been received from the event based imaging sensor is a final event of the set of events. This end condition is thus used in order to trigger the calculations of step 5012 (the calculation of the optical flow based on the accumulated values).

As has been noted, the specific end condition which is applied is not particularly limited in accordance with embodiments of the disclosure. However, a number of different types of end condition can be used as required depending the specific situation to which the embodiments of the disclosure are applied.

As a first example, the end condition may be related to the number of events which have been received for the current set of events. That is, in examples, $N$ is constant ($N_A = N_B = N$), so the condition becomes ($n = N$). All the iterations contain the same number of events. In this case, the time interval will be variable and determined by the timestamps of the first and last events [$t_1$, $t_N$].

In other words, in embodiments of the disclosure, the determination whether the current event is the final event of the current set of events is based on a number of events forming the current set of events with a threshold value.

This approach simplifies (or removes) the division operation to calculate the average point ( $P_B = \dfrac{P_B}{N}$ ) since dividing by a constant may be easier to implement in low level hardware than dividing by a variable number. In examples, the division operation may be further simplified if that number (i.e. the constant total number, N) is a natural power of 2. Indeed, in this case, the constant $N$ can be factored out of the equation of the optical flow:

$$\theta = \frac{\Delta P}{\Delta t} = \frac{P_B - P_A}{\Delta t} = \frac{\frac{1}{N}\sum^B e_n(x,y) - \frac{1}{N}\sum^A e'_n(x,y)}{\Delta t}$$

$$= \frac{1}{N}\frac{\sum^B e_n(x,y) - \sum^A e'_n(x,y)}{\Delta t}$$

Accordingly, for the calculation of the optical flow (or other motion), dividing by $N$ can be simply omitted and assumed to be a default scale factor applied on its magnitude.

While a constant number of events per set of events is one example which can be used in accordance with embodiments of the disclosure, the present disclosure is not particularly limited in this respect. Alternatively, in examples, the end condition may be related to, or driven by, the timestamp of the event received from the event based imaging sensor.

In this implementation of the disclosure, a constant time threshold $t_{th}$ is defined, so that when the timestamp of a new event- relative to the beginning of the interval at $t_1$- exceeds such threshold ($t_n > t_{th} + t_1$), the end condition is met. Ideally, that event should be registered as the first one in the next interval (in which case the end condition should be checked before accumulating the event into $P_B$).

Accordingly, in embodiments of the disclosure, the determination whether the current event is the final event of the current set of events is based on a difference between a time of detection of a first event of the current set of events and a time of detection of the current event.

If the density of events over time is high enough so that events are expected at every possible timestamp value, the event that triggers the end condition will always fall at the threshold value, which means that the length of the time interval at each iteration will be the equal, and equal to $t_{th}$. Under this assumption, a simplification similar to that of the case of determination by number of events can be exploited, but in this case in the division of the equation of the optical flow:

$$\theta = \frac{\Delta P}{\Delta t} = \frac{\Delta P}{t_{th}}$$

While in examples the end condition of Figure 5 of the present disclosure may be related to, or driven by, the timestamp of the event received from the event base imaging sensor, it will be appreciated that the present disclosure is not particularly limited in this regard. In examples, the end condition may not be dependent on an incoming event at all and may, instead, be determined on the basis of an external input.

For instance, in examples, the external input may be an external asynchronous poll signal - in which case neither the number of events or the interval length are going to be fixed- or, alternatively, some synchronous signal generated by a timer - in which case the same simplification as made when the end condition is related to the timestamp of the event can be made (provided the density of events is high enough (i.e. exceeds a threshold number of events per unit time)).

Thus, in embodiments of the disclosure, the determination whether the current event is the final event of the current set of events is based on an external signal.

As explained, the end condition which is used in order to determine whether or not a given event is a final event of a set of events is not particularly limited in accordance with embodiments of the disclosure. The end condition may vary depending on the situation to which the embodiments of the disclosure are applied. For example, selecting the appropriate end condition approach might depend on the requirements of the system in which the motion calculator is to be integrated, and the dynamic characteristics of the scene captured by the camera. Such a selection may further be accompanied with an adaption of the associated threshold value (whether it is $N$ for "driven by number of events", or $t_{th}$ for "driven by timestamp" or "external timer/periodic poll").

In the example of Figure 5 of the present disclosure, the optical flow is calculated in a manner which is independent of the polarity of the event which has been obtained. That is, the polarity of the event does not impact the determination of the optical flow (with events of both positive and negative polarity being treated together).

However, in examples, the optical flow (or other motion vector) can be calculated independently for each polarity. Indeed, in examples, the optical flow (or other motion vector) can be calculated in parallel for each polarity. Then, once computed, the vectors can, if required, be averaged in order to estimate the final optical flow. Alternatively, the separate values which have been computed can be retained for the positive and negative polarity events. This may be advantages in situations where the difference between positive and negative polarity events is important to consider. Furthermore, performing the calculation in parallel for the different polarity events can further improve the efficiency of calculation of the optical flow (or other motion vector).

Thus, in embodiments, the motion can be calculated in parallel for each polarity of event and the final value of the motion can be determined based on the individual values of the motion calculated for each polarity of event.

<Image regions>

In the example of Figure 5, the optical flow has been calculated based on all events received from the event based imaging sensor. However, in examples, the optical flow may be determined independently for different image regions.

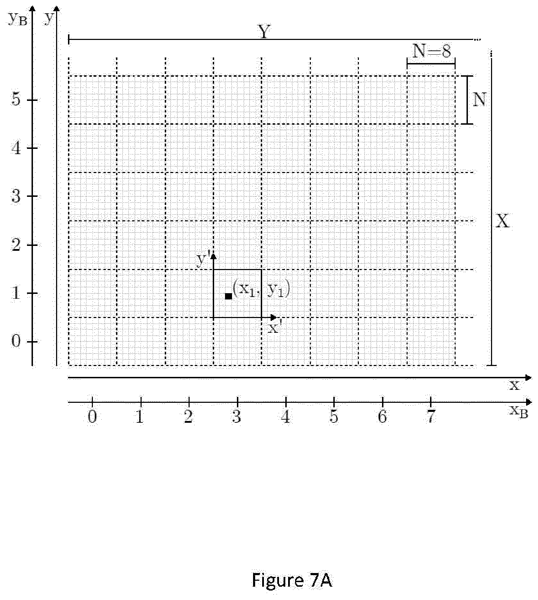

Consider, now, Figure 7A of the present disclosure. Figure 7A of the present disclosure illustrates an example of event address segmentation in accordance with embodiments of the disclosure. That is, in the example of Figure 7A of the present disclosure, events are segmented into different regions based on the address (or position) of that event. The optical flow can then be determined on the basis of these different image regions.

Indeed, in the example of Figure 7A, the image frame is divided into smaller areas or voxels (typically squares) of a given size N x N . One optical flow vector will be periodically estimated for each of the voxels. Furthermore, in this example, the calculation of the optical flow within a voxel is executed by processing only visual information contained within that given voxel.

The different events received from the event based imaging sensor may be assigned to different voxels (image regions) based on the position of the pixel (received in the indication of the pixel position acquired by the input circuitry 4002.

In examples, because the digital data is binary, an efficient mapping of event address to voxel can be performed.

That is, as shown in Figure 7A, the full address data of a pixel can be divided into its corresponding voxel position and its relative position within that voxel, as long as the voxel width is a natural power of 2. This presents the advantageous of immediately routing each received event to its corresponding optical flow (or, more generally, motion vector) calculation engine, and to have the necessary scaling ready for that calculation, without requiring any logic operations.

For example:

$$N = 2^a \; \rightarrow \; a \text{ bits for local address } (x \text{ and } y)$$

$$\rightarrow (\lceil log2(X) \rceil - a) \text{ bits for voxel's } x \text{ address}$$

$$\rightarrow (\lceil log2(Y) \rceil - a) \text{ bits for voxel's } y \text{ address}$$

$$\underset{\underset{\text{voxel address}}{\underbrace{\underset{x_B}{\underline{0011}}\overset{\overset{x'}{}}{\underline{010}}, \; \underset{y_B}{\underline{0001}}\overset{\overset{y'}{}}{\underline{011}}}}}{\overset{\overset{\text{local address}}{}}{(x_1, y_1) = (}\quad)}$$

In this way, an event position can be divided into its corresponding voxel position and relative position within that voxel.

Accordingly, in embodiments of the disclosure, an image frame of the event based image sensor can be partitioned into a plurality of portions (or regions - such as a voxel) and the motion calculator can calculate the motion for each of the plurality of portions. Thus, a different value of optical flow may be provided for each of the portions.

In examples, sequential processing of the voxels may be provided. That is, consider the example implementation of Figure 5 of the present disclosure. When this example implementation is applied to different voxels, the value of $P_B$ may be updated independently and in parallel in every voxel, and the calculations for $\theta$ may be sequentially performed once the end condition of step 5010 has been satisfied. Accordingly, in such a situation, only one instance of the arithmetic logic of step 5012 has to be implemented in hardware. This further improves the efficiency of calculation when the present disclosure is applied to different voxels (i.e. portions or regions) of the image. In order to sequentially perform the calculations of step 5012 in this manner, the end condition must be time-based (such that each set of events is of the same duration). Accordingly, with other end conditions, the different calculations of $\theta$ may also be performed in parallel (i.e. with different instances of the arithmetic logic step 5012 when implemented in hardware).

In examples, when the calculation of the motion vector (such as optical flow) has been made for different regions, the different values of the optical flow which have previously been generated can be used in the calculation of a new value of optical flow. For example, the values of optical flow which have been generated for neighbouring regions may influence the calculation of the optical flow for a current region.

By means of an example, it will be appreciated that spatial neighbours can be used in order to influence the calculation of optical flow for a current region. That is, the value of $\theta$ which is calculated can be low-pass filtered in space. In particular, the values of the optical flow calculated for adjacent regions are weighted and summed to the actual optical flow for that region. The weighting may be a weighting which increases as the distance from the current region increases, for example. Alternatively, the weighting may be a weighting which increases as the number of events in a given region increases, for example. Furthermore, in examples, the value of optical flow $\theta$ which is calculated for the current region can be based upon a selection of the value which has been calculated for one or more of the neighbouring regions. In examples, the selection may be made in accordance with a value which has been computed for the one or more neighbouring regions. That is, for example, the value of optical flow for the current region may be determined based on the median of the values of optical flow which have been calculated for the neighbouring regions. However, while the median value of the optical flow of the neighbouring regions can be used in order to calculate a value of the optical flow for the current region, it will be appreciated that the present disclosure is not particularly limited in this respect. That is, any value (and not necessarily the median) can be used for a calculation or selection of the value of the optical flow for the current region based on the values of optical flow of the neighbouring regions as required.

Therefore, according to embodiments of the disclosure, the motion for a given portion of the plurality of portions is weighted by the motion of adjacent portions of the plurality of portions. In this way, reliability of the value of the motion which is calculated can be further improved, since the low-pass filtering applied by weighing the calculation in this manner further removes the influence of high spatial frequency fluctuations (noise) in the calculation of motion.

Alternatively or in addition, the calculation of the temporal (or time) neighbours can be used in order to influence the calculation of optical flow for a current region. That is, the value of $\theta$ which is calculated can be low-pass filtered in time. In particular, the previous calculated value for optical flow for a given region can be weighted and summed to the actual optical flow value for that region. In this example, the weighting which is applied may be a weighting such that the weighting increases for a value of optical flow which was calculated closer in time to the current calculation of optical flow (with values of optical flow which having decreasing influence the longer in time ago they were from the current time).

Therefore, according to embodiments of the disclosure, the motion for a given portion of the plurality of portions is weighted by previously calculated values of the motion for that given portion of the plurality of portions. In this way, reliability of the value of the motion which is calculated can be further improved, since the low-pass filtering applied by weighting the calculation based on the previous values (temporal weighting) further removes the influence of high temporal frequency fluctuations (noise) in the calculation of motion.

<Overlapping Image Regions>

As has been described, in examples, an image frame of the event based image sensor is partitioned into a plurality of portions (or image regions) and wherein the motion calculator calculates the motion for each of the plurality of portions.

In some examples, these image regions may be independent, such that each image region represents a unique part of the image. However, in other examples, the image regions may be at least partially overlapping with each other. When the image regions are at least partially overlapping, this means that a same portion of an image may be present in one or more of the image regions.

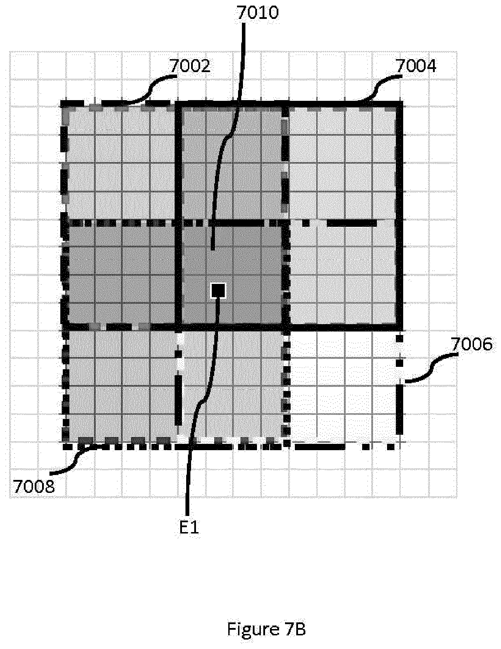

Consider, now, the example of Figure 7B of the present disclosure. Figure 7B illustrates an example of overlapping voxels in accordance with embodiments of the disclosure. Indeed, in this example, the image is divided in voxels (an example of image portions or image regions) with overlapping areas (i.e. the size of the voxels is greater than their separation).

For example, in Figure 7B, four different voxels are shown 7002, 7004, 7006 and 7008. The area 7010 is contained within each of the four voxels 7002, 7004, 7006 and 7008. Therefore, an event E1 occurring within the area 7010 will be present in each of the four different voxels 7002, 7004, 7006 and 7008.

This means there is redundancy, since one single event may be mapped to more than one voxel. Accordingly, this same event may be processed during the calculations for more than one voxel. Since the same event can be processed for more than one voxel, suppression of calculations error can be achieved. For example, once the same event has been calculated in different voxels, spatial averaging/filtering methods can be applied in order to improve error performance at the output.

While the example of Figure 7B of the present disclosure has been described with reference to an example situation of four overlapping voxels, it will be appreciated that the present disclosure is not particularly limited in this regard. That is, more generally, any number of voxels (or image regions) may be provided as required depending on the situation to which the embodiments of the disclosure are applied.

Thus, in embodiments of the disclosure, an image frame of the event based image sensor may be partitioned into a plurality of portions and the motion calculator may calculate the motion for each of the plurality of portions, wherein in embodiments of the disclosure, the plurality of portions are overlapping portions of the image frame.

<Movement Between Image Regions>

In embodiments of the disclosure, it can be assumed that movement of features occurs entirely within a single image portion (region, or voxel). However, in some situations, for certain types of moving objects (such as very high speed objects, for example) it may be necessary to consider movement of features between image regions.

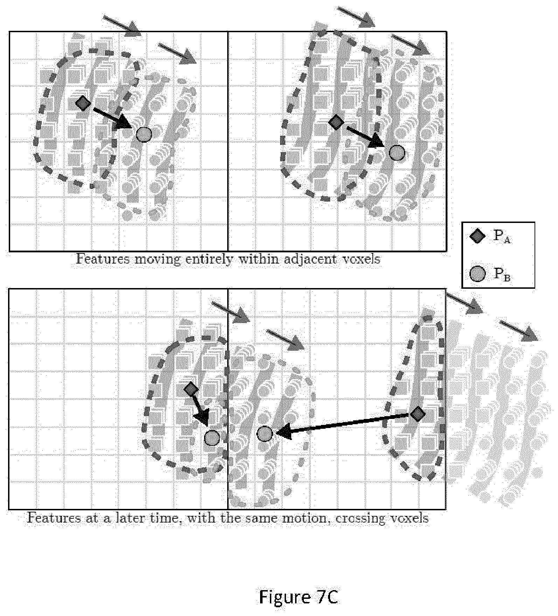

Consider, now, Figure 7C of the present disclosure. Figure 7C of the present disclosure illustrates an example of features crossing a voxel boundary in accordance with embodiments of the disclosure.

As illustrated in the bottom of Figure 7C, one or more curves entering or leaving the voxel's bounds (crossing borders) may cause the points $P_A$ and $P_B$ to shift abruptly. In this situation, the shift in the points $P_A$ and $P_B$ is not necessarily linked to the actual motion of the feature within the scene. Indeed, in examples, events corresponding to different curves may incorrectly be averaged together within the same voxel and time interval, and therefore the average position of those events may not necessarily represent an estimate position of a curve or feature. As a result, the error in motion estimation may increase.

Accordingly, in examples, a detection of the level of discontinuity in motion can be made, in order to detect events occurring on the perimeter of a voxel.

Indeed, in examples, a mask can be created, the mask consisting of the positions on the perimeter of the voxel. Then, a count can be made of the number of events during an iteration of the calculation (i.e. prior to the occurrence of the end condition) of the number of events that fall within that mask. This value, of the number of events falling within the mask, can be stored at the same time that the total event counter n is updated.

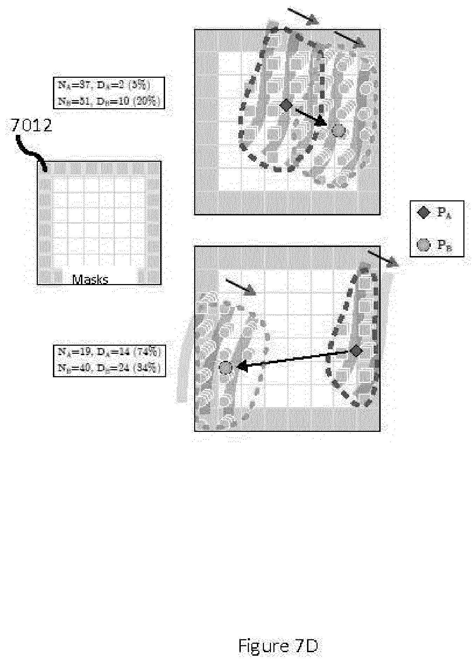

Consider, now, the example of Figure 7D of the present disclosure. Figure 7D of the present disclosure illustrates an example of a discontinuity detector in accordance with embodiments of the disclosure.

In this example, a mask 7012 is generated, the mask corresponding to the perimeter of the voxel. Then, this mask to two different example situations. The first application of this mask is shown with the mask applied to voxel 7014. A count is made based on the number of events during an iteration of the calculation (i.e. prior to the occurrence of the end condition) of the number of events that fall within that mask. For voxel 7014, the total number of events $N_A$ in the set of events A is 37. Of these 37 events, 2 events are located within the masked area. Therefore, the discontinuity counter $D_A = 2$. This corresponds to 5% of the events of the set of events A falling within the masked area.

Furthermore, for voxel 7014, the total number of events $N_B$ in the set of events B is 51. Of these 51 events, 10 events are located within the masked area. Therefore, the discontinuity counter $D_B = 10$. This corresponds to 10% of the events of the set of events B falling within the masked area.

On the other hand, a second voxel 7016 is also shown in this example. For the voxel 7016, the total number of events $N_A$ in the set of events A is 19, 14 of which are located within the masked area (such that $D_A = 14$). This corresponds to 74% of the events in the set of events A occurring within the masked area for the voxel 7016. Likewise, for this voxel 7016, there are 40 events $N_B$ occurring within the set B, of which 24 events fall within the masked area (such that $D_B = 24$). This corresponds to 34% of the events in the set of events B occurring within the masked area for the voxel 7016.

From a comparison of voxel 7014 and 7016, it can be seen that a much higher percentage of the total events for set A and set B are located within the masked area for voxel 7016 compared to voxel 7014. As such, there is an increased risk of error in the calculation of the motion vector for voxel 7016 compared to the voxel 7014. Thus, the reliability of the motion vector determined for voxel 7014 is lower than the reliability of the motion vector determined for voxel 7016.

Thus, in examples, an indication of the reliability of the voxel can be determined based on the discontinuity counter and the total number of events for each set of events. In examples, a voxel for which the percentage of events falling within the masked region exceeds a certain threshold value may be determined as unreliable. That is, a threshold level may be applied in order to categorise the motion vector determined from a certain voxel as reliable or unreliable depending on the percentage of the events falling within the masked region.

In examples, a motion vector calculated for a voxel which has been determined as unreliable may be discarded. In examples, a weighting may be applied to the motion vector which is determined in accordance with the reliability of that motion vector (based on the percentage of events occurring within the masked region). In examples, only motion vectors corresponding to "reliable" voxels may be selected or averaged or otherwise be provided as candidates to be output to the next processing stages.

It will be appreciated that the motion estimation vector $\theta$ is obtained per voxel and per iteration, and so are the values of $D_A$, $N_A$, $D_B$ and $N_B$ (note that the total number of events N is also considered since it can provide a relative level of the reliability based on the discontinuity counter). In a flowing processing stage, these four values can be used - as any combination of logic or arithmetic operations - to determine the validity or confidence of the estimated motion vector. For instance, the relative reliability of the event-sets A and B ($D_A/N_A$ and $D_B/N_B$ respectively) may be required to be below a certain threshold in order for that motion vector to be considered valid. Alternatively, when using "neighbours", the coefficients of the weighted sum from adjacent/previous values may be dependent on the reliability that has been determined.

Of course, while Figure 7D has been described with reference to an example situation of the use of a mask to determine the reliability of the motion vector for that voxel (based on the number of events occurring within that masked area) it will be appreciated that the present disclosure is not particularly limited in this respect. In particularly the masked region is not limited to that region as illustrated in Figure 7D and may instead take any size or configuration as desired depending on the nature of the situation to which the embodiments are applied. For example, while, in this example, the masked region includes one pixel width of the perimeter of the voxel, the present disclosure is not particularly limited in this regard. Instead, the width, size and configuration of the mask may be very different from that shown in this example.

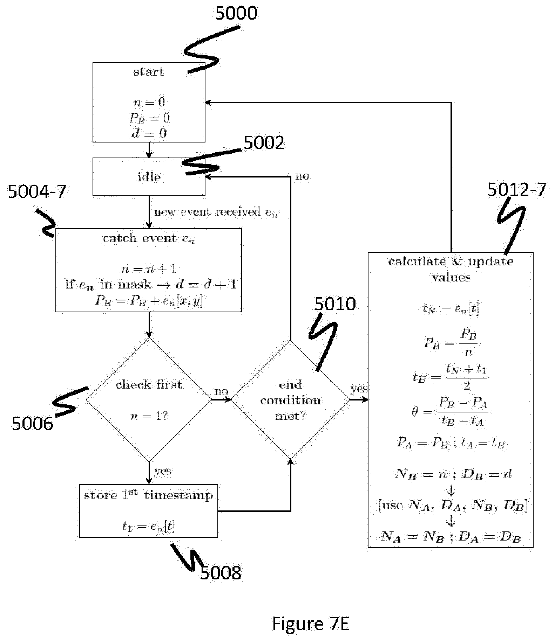

Consider, now, Figure 7E of the present disclosure. Figure 7E illustrates an example implementation of an optical flow calculation in accordance with embodiments of the disclosure.

The example of Figure 7E is based on the example calculation which has been described with reference to Figure 5 of the present disclosure. Therefore, further discussion of the features which have already been described will not be repeated at this stage for brevity of disclosure.

However, it will be appreciated that in addition to those details which have already been described with reference to Figure 5 of the present disclosure, the example of Figure 7E of the present disclosure also determines and updates a discontinuity counter for the current set of events (counting the number of events occurring within the masked region) and uses this value - optionally in addition to the total number of events in that set of events - to determine the reliability value of the motion vector which is determined.

More specifically, in the example of Figure 7E, when a new event $e_n$ is acquired, it is determined (in step 5004-7) whether that event falls within the masked region; if so the discontinuity counter $d$ is updated. Then, once the end condition has been met, this value $d$ is used in accordance with the total number of events in the set of events, in order to calculate the reliability of the motion vector (as has been described with reference to Figure 7D of the present disclosure).

Accordingly, in embodiments, the accumulation circuitry is further configured to update a second accumulated value (the discontinuity counter in the example of Figure 7E) when a pixel position associated with the current event is located within a predetermined pixel area (the masked area in the example of Figure 7E); and wherein the calculation circuitry is configured to calculate a reliability of the calculated motion based on the second accumulated value when it is determined that the current event is the final event of the set of events (based, for example, on the percentage of events of the current set of events which fell within the masked area).

In this way, the accuracy of the calculation of the motion vector can be further improved, since the reliability of the motion vector can be used in order to disregarded or otherwise minimise (e.g. through weighting) a motion vector which is unreliable (e.g. due to a significant number of events occurring in proximity to the perimeter of the voxel (which in turn, increases the risk that the feature will move between voxels during the current iteration)).

<Overlapping Regions and Discontinuity>

With non-overlapping voxels (or image regions) a curve leaving a voxel is also entering another neighbouring one at the same time. Therefore, an unfavourable situation may occur, whereby neighbouring voxels are, simultaneously, determined as unreliable. This may lead to a situation where motion vectors must be disregarded for an entire region of the image. However, for overlapping regions (or overlapping voxels) the edge of a voxel may always be located in the same place as the centre of another voxel overlapping with the former.

Accordingly, for a given location in the image, there may be more than one overlapping regions on which the motion vector can be determined. The corresponding reliability which is determined for each of these overlapping regions can be used to apply a logical or arithmetic operation to select/average the best (or most reliable) motion vector from the candidates to be output to the next processing stage.

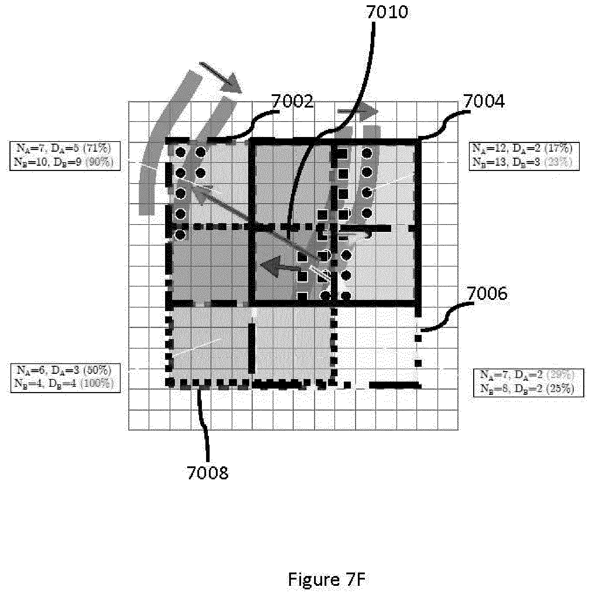

Consider, now, the example of Figure 7F of the present disclosure. Figure 7F illustrates an example of combining overlapping voxels and discontinuity detection in accordance with embodiments of the disclosure. In this example, a number of overlapping voxels are shown (similar to Figure 7B of the present disclosure). However, in this example, a reliability for each of the voxels is determined in accordance with a method such as that described with reference to Figure 7E of the present disclosure.

In this example, for certain locations in the images, there may be more than one overlapping regions on which the motion vector can be calculated. Indeed, for the central 4x4 region in the example of Figure 7F, there are in fact four overlapping regions on which the motion vector can be calculated. As such, the motion vector can be calculated in view of the reliability which has been determined for each of the overlapping voxels. For example, a selection may be made on the basis of the reliability which has been calculated (e.g. to discard the most unreliable or to discard those having a reliability less than a predetermined threshold value). Alternatively, or in addition, all regions may be used in the calculation, weighted according to the reliability which has been determined.

Taking Figure 7F as an example, voxel 7002 has curves crossing its borders (high discontinuity counter, low reliability). Accordingly, the estimated motion vector for that voxel may have considerable error margins in its calculation. For the central 4x4 area of the image 7010, there are four different voxels which can be used for the calculation of the motion vector (namely, voxel 7002, 7004, 7006 and 7008). Therefore, a selection can be made to use the voxel within the lowest discontinuity counter (highest reliability) for this image area. In this specific example, the voxel 7004 has the lowest discontinuity counter and thus is the most reliable voxel for the calculation of the motion vector for this area of the image.

As such, by using overlapping voxels (or image portions) and/or an estimation of the reliability of each of these voxels, accuracy and reliability of the motion vector can be further improved.

<Method>

Hence, more generally, a method of calculating motion is provided in accordance with embodiments of the disclosure.

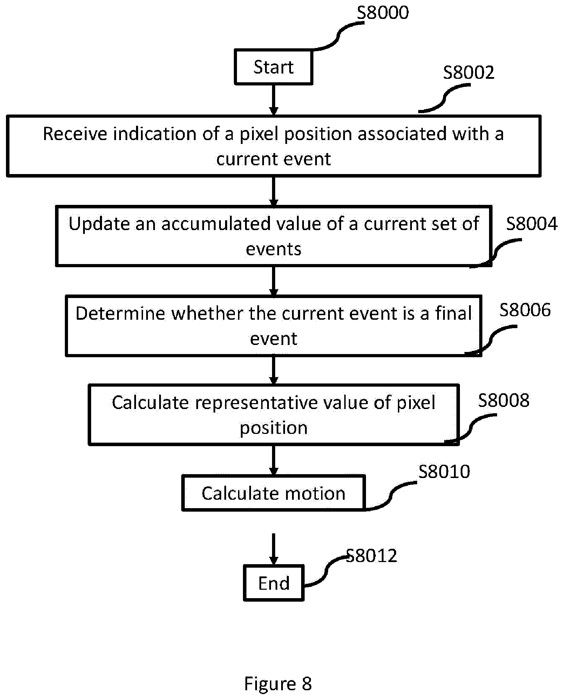

Consider, now, Figure 8 of the present disclosure. Figure 8 of the present disclosure illustrates an example method of motion calculation in accordance with embodiments of the disclosure.

The method of Figure 8 of the present disclosure may, in some examples, be carried out by a motion calculator such as that described with reference to Figure 4 of the present disclosure.

The example method of Figure 8 starts at step S8000 and proceeds to step S8002.

In step S8002, the method comprises receiving an indication of a pixel position associated with a current event detected by the event based image sensor.

Then, in step S8004, the method comprises updating an accumulated value of a current set of events based on the pixel position associated with the current event.

In step S8006, the method comprises determining whether the current event is a final event of the current set of events.

When it is determined that the current event is the final event of the current set of events, the method comprises, in step S8008, calculating a representative value of the pixel position for events in the current set of events based on the accumulated value.

In step S8010, the method then comprises calculating motion based on a difference between the representative value of the pixel position for events in the current set of events and a representative value of the pixel position for a preceding set of events, and a difference between a representative time of detection assigned to the current set of events and a representative time of detection of the preceding set of events.

In this way, motion in the environment imaged by the event based image sensor can be efficiently and reliably calculated. As an example, optical flow (for a 2D event based image sensor, where each event is defined by two coordinate values) can be efficiently and reliably calculated for events from an event based image sensor.

It will be appreciated that while a method of calculating motion is illustrated with reference to Figure 8, the present disclosure is not particularly limited in this regard. For example, a number of additional steps may also be included in addition to those method steps which are illustrated in Figure 8. Furthermore, the order of the method steps is not necessarily limited to the order of those method steps illustrated in Figure 8. In particular, at least one or more of the method steps illustrated in Figure 8 may be performed in parallel. The method steps of Figure 8 may also be repeated any number of times as further indications of events detected by an event based imaging sensor are received.

<Computer Program>

Furthermore, it will be appreciated that the methods of the present disclosure may be carried out on hardware suitably adapted as applicable by software instruction or by the inclusion or substitution of dedicated hardware. Thus, the required adaptation to existing parts of a conventional equivalent device may be implemented in the form of a computer program product comprising processor implementable instructions stored on a non-transitory machine-readable medium such as a floppy disk, optical disk, hard disk, PROM, RAM, flash memory or any combination of these or other storage media, or realized in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

<Example System>

Furthermore, an imaging system may be provided in accordance with embodiments of the disclosure.

Figure 9 of the present disclosure illustrates an example imaging system in accordance with embodiments of the disclosure.

The example imaging system 9000 of Figure 9 comprises an event based imaging sensor 9002 and an optical flow calculator 4000.

In examples, the event based imaging sensor 9002 may be an imaging sensor such as the Dynamic Vision Sensor described with reference to Figure 1 of the present disclosure.

The optical flow calculator 4000 comprises input circuitry 4002, accumulation circuitry 4004, determination circuitry 4006 and calculation circuitry 4008 as described with reference to Figure 4 of the present disclosure.

While an example imaging system has been illustrated with reference to Figure 9 of the present disclosure, it will be appreciated that the present disclosure is not particularly limited in this regard. For example, the imaging system illustrated in Figure 9 of the present disclosure comprises only an event-based imaging sensor and a motion calculator. One or more additional elements may also be provided within an imaging system in accordance with embodiments of the present disclosure.

As an example, an imaging system according to embodiments of the present disclosure may further include image processing circuitry to further process events from the imaging sensor, storage circuitry (to store events and/or images generated by the image processing circuitry) communication circuitry configured to transmit data from the imaging system to one or more other devices (such as circuitry configured to transmit data from the imaging system over a communication network - such as the internet), a display device configured to display data generated by the imaging system (such as data generated by image processing circuitry) an event filter configured to filter events from the event based imaging sensor (e.g. to reduce a noise component of the signal) or the like.

Accordingly, while only an event-based image sensor and an motion calculator are shown in the example system of Figure 9 of the present disclosure, it will be appreciated that any number of additional elements may also be provided within this imaging system depending on the situation to which the embodiments of the disclosure are applied. In addition, events and their corresponding motion may be further processed by downstream circuitry not necessarily forming a part of the event-based imaging sensor shown.

Furthermore, it will be appreciated that numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

**Claims**

1. A motion calculator for an event based image sensor, comprising:

    input circuitry configured to receive an indication of a pixel position associated with a current event detected by the event based image sensor;
    accumulation circuitry configured to update an accumulated value of a current set of events based on the pixel position associated with the current event;
    determination circuitry configured to determine whether the current event is a final event of the current set of events; and
    calculation circuitry configured, when it is determined that the current event is the final event of the current set of events, to:

        calculate a representative value of the pixel position for events in the current set of events based on the accumulated value; and
        calculate motion based on a difference between the representative value of the pixel position for events in the current set of events and a representative value of the pixel position for a preceding set of events, and a difference between a representative time of detection assigned to the current set of events and a representative time of detection of the preceding set of events.

2. The motion calculator according to claim 1, wherein the representative value is an average value determined based on the accumulated value and a number of events forming part of the current set of events.

3. The motion calculator according to claim 1 or 2, wherein the determination whether the current event is the final event of the current set of events is based on a number of events forming the current set of events with a threshold value.

4. The motion calculator according to claim 3, wherein the threshold value is set to be a natural power of 2.

5. The motion calculator according to any preceding claim, i) wherein the determination whether the current event is the final event of the current set of events is based on a difference between a time of detection of a first event of the current set of events and a time of detection of the current event or ii) wherein the determination whether the current event is the final event of the current set of events is based on an external signal.

6. The motion calculator according to any preceding claim, wherein the accumulation circuitry is further configured to update a second accumulated value when a pixel position associated with the current event is located within a predetermined pixel area; and wherein the calculation circuitry is configured to calculate a reliability of the calculated motion based on the second accumulated value when it is determined that the current event is the final event of the set of events.

7. The motion calculator according to any preceding claim, wherein the motion is calculated in parallel for each polarity of event and wherein the final value of the motion is determined based on the individual values of the motion calculated for each polarity of event.

8. The motion calculator according to any preceding claim, wherein the representative time of detection assigned to the current set of events is an average time of detection of the events of the current set of events.

9. The motion calculator according to any preceding claim, wherein an image frame of the event based image sensor is partitioned into a plurality of portions and wherein the motion calculator calculates the motion for each of the plurality of portions.

10. The motion calculator according to claim 9, wherein the plurality of portions are overlapping portions of the image frame.

11. The motion calculator according to claim 9 or 10, i) wherein the motion for a given portion of the plurality of portions is weighted by the motion of adjacent portions of the plurality of portions; and/or ii) wherein the motion for a given portion of the plurality of portions is weighted by previously calculated values of the motion for that given portion of the plurality of portions.

12. The motion calculator according to any preceding claim, wherein the motion is an optical flow or a scene flow.

13. A system comprising the motion calculator according to any preceding claim and the event based image sensor.

14. A method of calculating motion for an event based image sensor, the method comprising:

receiving an indication of a pixel position associated with a current event detected by the event based image sensor;
updating an accumulated value of a current set of events based on the pixel position associated with the current event;
determining whether the current event is a final event of the current set of events;
and, when it is determined that the current event is the final event of the current set of events:

calculating a representative value of the pixel position for events in the current set of events based on the accumulated value; and
calculating motion based on a difference between the representative value of the pixel position for events in the current set of events and a representative value of the pixel position for a preceding set of events, and a difference between a representative time of detection assigned to the current set of events and a representative time of detection of the preceding set of events.

15. A computer program comprising instructions which, when implemented by a computer, cause the computer to perform a method according to claim 14.

Figure 1

Figure 2

Figure 3

4000

Motion calculator

| Input Circuitry | Accumulation Circuitry | Determination Circuitry | Calculation Circuitry |

4002          4004          4006          4008

Figure 4

5000

start

$n = 0$
$P_B = 0$

5002

idle

no

new event received $e_n$

catch event $e_n$    5004

$n = n + 1$
$P_B = P_B + e_n[x, y]$

5006

5010

5012

calculate & update
values

$t_N = e_n[t]$

$P_B = \dfrac{P_B}{n}$

check first

$n = 1?$

no

end
condition
met?

yes

$t_B = \dfrac{t_N + t_1}{2}$

$\theta = \dfrac{P_B - P_A}{t_B - t_A}$

$P_A = P_B \; ; t_A = t_B$

yes

store 1$^{st}$ timestamp

$t_1 = e_n[t]$

5008

Figure 5

Figure 6

Figure 7A

Figure 7B

Features moving entirely within adjacent voxels

$P_A$

$P_B$

Features at a later time, with the same motion, crossing voxels

Figure 7C

Figure 7D

5000

start

$n = 0$
$P_B = 0$
$d = 0$

5002

idle ————— no

5004-7

new event received $e_n$

catch event $e_n$

$n = n + 1$
if $e_n$ in mask $\rightarrow d = d + 1$
$P_B = P_B + e_n[x, y]$

5010

5006

check first —— no —— end condition met? —— yes

$n = 1$?

5012-7

calculate & update values

$t_N = e_n[t]$

$P_B = \dfrac{P_B}{n}$

$t_B = \dfrac{t_N + t_1}{2}$

$\theta = \dfrac{P_B - P_A}{t_B - t_A}$

$P_A = P_B \; ; \; t_A = t_B$

$N_B = n \; ; \; D_B = d$
$\downarrow$
[use $N_A, D_A, N_B, D_B$]
$\downarrow$
$N_A = N_B \; ; \; D_A = D_B$

yes

store 1st timestamp

$t_1 = e_n[t]$

5008

Figure 7E

29

7010

7002

7004

$N_A=7, D_A=5 (71\%)$
$N_B=10, D_B=9 (90\%)$

$N_A=12, D_A=2 (17\%)$
$N_B=13, D_B=3 (23\%)$

7006

$N_A=6, D_A=3 (50\%)$
$N_B=4, D_B=4 (100\%)$

$N_A=7, D_A=2 (29\%)$
$N_B=8, D_B=2 (25\%)$

7008

Figure 7F

S8000

Start

S8002

Receive indication of a pixel position associated with a current event

Update an accumulated value of a current set of events

S8004

Determine whether the current event is a final event

S8006

Calculate representative value of pixel position

S8008

Calculate motion

S8010

End

S8012

Figure 8

9000

9002

Event based imaging sensor

4000

Motion calculator

| Input Circuitry | Accumulation Circuitry | Determination Circuitry | Calculation Circuitry |

4002          4004          4006          4008

Figure 9

Europäisches
Patentamt

European
Patent Office

Office européen
des brevets

# EUROPEAN SEARCH REPORT

**Application Number**

**EP 24 38 3090**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VALERDI JUAN L. ET AL: "Insights into Batch Selection for Event-Camera Motion Estimation", SENSORS, vol. 23, no. 7, 3 April 2023 (2023-04-03), XP093256299, CH ISSN: 1424-8220, DOI: 10.3390/s23073699 Retrieved from the Internet: URL:https://www.mdpi.com/1424-8220/23/7/3699> | 1,3-5, 7-11, 13-15 | INV. G06T7/207 |
| Y | * the whole document * | 2 | |
| A | | 6,12 | |
| | ----- | | |
| X | IENG SIO-HOI ET AL: "Event-Based 3D Motion Flow Estimation Using 4D Spatio Temporal Subspaces Properties", FRONTIERS IN NEUROSCIENCE, vol. 10, 6 February 2017 (2017-02-06), XP093256671, CH ISSN: 1662-453X, DOI: 10.3389/fnins.2016.00596 | 1,3-5,7, 8,12-15 | |
| | | | **TECHNICAL FIELDS SEARCHED (IPC)** |
| Y | * abstract; figure 4 * | 2 | G06T |
| A | * Section 2.1 * | 6,9-11 | H04N |
| | * Algorithms 1-2 * | | |
| | ----- | | |
| | -/-- | | |

The present search report has been drawn up for all claims

| Place of search | Date of completion of the search | Examiner |
|---|---|---|
| Munich | 6 March 2025 | Yilmaz, Özgün |

EPO FORM 1503 03.82 (P04C01)

Europäisches
Patentamt

European
Patent Office

Office européen
des brevets

## EUROPEAN SEARCH REPORT

**Application Number**

EP 24 38 3090

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Guillermo Gallego ET AL: "Event-based Vision: A Survey", IEEE transactions on pattern analysis and machine intelligence, 26 February 2020 (2020-02-26), pages 1-1, XP055754728, DOI: 10.1109/TPAMI.2020.3008413 Retrieved from the Internet: URL:https://arxiv.org/pdf/1904.08405.pdf [retrieved on 2020-11-27] | 1,3-5,7, 8,12-15 | |
| Y | * abstract * | 2 | |
| A | * page 162 * * page 164 - page 165 * ----- | 6,9-11 | |
| Y | ZUBIC NIKOLA ET AL: "From Chaos Comes Order: Ordering Event Representations for Object Recognition and Detection", 2023 IEEE/CVF INTERNATIONAL CONFERENCE ON COMPUTER VISION (ICCV), IEEE, 1 October 2023 (2023-10-01), pages 12800-12810, XP034515026, DOI: 10.1109/ICCV51070.2023.01180 [retrieved on 2024-01-15] * the whole document * ----- | 2 | |

**TECHNICAL FIELDS SEARCHED (IPC)**

The present search report has been drawn up for all claims

| Place of search | Date of completion of the search | Examiner |
|---|---|---|
| Munich | 6 March 2025 | Yilmaz, Özgün |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)